# EUROPÄISCHE PATENTSCHRIFT

(11) **EP 3 502 508 B1**
(45) Veröffentlichungstag und Bekanntmachung des Hinweises auf die Patenterteilung: **03.03.2021**
(21) Anmeldenummer: 18000957.3
(22) Anmeldetag: 10.12.2018
(51) Int. Cl.: F16D 65/08

(54) **BREMSBACKE EINER FAHRZEUG-TROMMELBREMSE**
BRAKE SHOE OF A VEHICLE DRUM BRAKE
MÂCHOIRE DE FREIN D'UN FREIN À TAMBOUR DE VÉHICULE

(30) Priorität: 21.12.2017 DE 202017006610 U
(43) Veröffentlichungstag der Anmeldung: 26.06.2019
(73) Patentinhaber: GFA Gothaer Fahrzeugachsen GmbH, 99867 Gotha (DE)
(72) Erfinder: Schneider, Bernd, 99867 Gotha (DE)
(74) Vertreter: Weihrauch, Frank

(56) Entgegenhaltungen:
- EP-A1- 0 251 545
- DE-A1-102014 218 938
- US-A- 3 650 360
- US-A- 4 732 240

## Beschreibung

Die Erfindung betrifft eine Bremsbacke einer nockenbetätigten Fahrzeug-Trommelbremse insbesondere für trommelgebremste Fahrzeugachsen von Nutzfahrzeugen und deren Anhängern, wie z.B. aus EP-A-251 545 bekannt.

Aus dem Stand der Technik ist es bekannt, Bremssysteme, insbesondere bei Nutzfahrzeugen, als Trommelbremsen auszubilden. Die Trommelbremsen sind im Anwendungsbereich von Fahrzeugen in der Regel als Innenbacken-Trommelbremsen ausgebildet. Die Bremswirkung wird erzielt, indem Bremsbacken nach außen gespreizt werden, wodurch sich zwischen den Außenflächen der Bremsbacken, welche mit einem Bremsbelag versehen sind, und der inneren Mantelfläche der Bremstrommel eine Reibung ausbildet. Die Kraft zur Spreizung der Bremsbacken wird bei Personenkraftwagen in der Regel durch Radbremszylinder erzeugt, während bei Nutzfahrzeugen üblicherweise Bremswellen mit Nocken Anwendung finden, bei deren Verdrehung die Nocken auf die Bremsbacken wirken.

Der Vorteil nockenbetätigter Trommelbremsen besteht in der möglichen robusten Ausbildung mit geringer Störanfälligkeit, da kein Radbremszylinder im Inneren der Bremstrommel angeordnet werden muss. Vorteilhaft ist auch die Einsparung des Bauraumes für einen Radbremszylinder. Nachteilig sind die erhöhten Beanspruchungen der Bremsbacken in dem Bereich der Kraftübertragung der Nocken auf die Bremsbacken, da durch die Verdrehung der Nocken zusätzliche Scherkräfte entstehen.

Aufgabe der Erfindung ist es, eine Bremsbacke einer nockenbetätigten Fahrzeug-trommelbremse bereitzustellen, welche eine erhöhte Betriebssicherheit und Lebensdauer aufweist und kostengünstig herstellbar ist.

Die Aufgabe wird durch die im Patentanspruch 1 aufgeführten Merkmale gelöst. Bevorzugte Weiterbildungen ergeben sich aus den Unteransprüchen.

Eine gattungsgemäße Bremsbacke einer nockenbetätigten Fahrzeug-Trommelbremse weist ein Belagblech und ein Stegblech als Tragbauteile auf. Das Belagblech ist teilkreisförmig gekrümmt. Es wird auch als Belagträger oder Rückenplatte bezeichnet. An seiner Außenseite trägt das Belagblech den Bremsbelag. Die Krümmung der Außenseite des Belagblechs korrespondiert mit der Krümmung der inneren Mantelfläche der Bremstrommel, mit der die Bremsbacke bei bestimmungsgemäßer Verwendung zusammenwirkt. Bei der Außenseite handelt es sich um die konvex gekrümmte Seite des Belagblechs. Das Stegblech ist an der Innenseite des Belagblechs angeordnet. Bei der Innenseite handelt es sich um die konkav gekrümmte Seite des Belagblechs. Die Kontur des Stegblechs folgt der Krümmung des Belagblechs. Das Belagblech und das Stegblech sind miteinander verbunden. Das Belagblech und das Stegblech sind miteinander verbunden, zum Beispiel durch Verschweißung. Möglich ist jedoch auch die Realisierung in einem Bauteil. Das Stegblech ist so gegenüber dem Belagblech angeordnet, dass sich in einem Hauptabschnitt ein T-Querschnitt ergibt. Das Belagblech bildet dabei den Flansch und das Stegblech den Steg des T-Querschnitts. Des Stegblech ist dabei vorzugsweise etwa mittig zur Quererstreckung des Belagblechs angeordnet.

Die Bremsbacke weist ferner zwei sich gegenüberliegende Endabschnitte auf. Es handelt sich zum einen um einen lagerseitigen Endabschnitt, mit dem sich die Bremsbacke an einem Lagerbolzen abstützt. Der Lagerbolzen ist Bestandteil einer Bremsträgerbaugruppe. Zum anderen handelt es sich um einen nockenseitigen Endabschnitt. An dem nockenseitigen Endabschnitt ist eine Druckkraft in die Bremsbacke einleitbar. Die Druckkraft wird durch einen Bremsnocken bereitgestellt, indem sich dieser bei einer Bremsbetätigung mitttels der Bremswelle verdreht. Üblicherweise wirkt die Bremsnocke dabei nicht direkt auf das Stegblech in dem nockenseitigen Endabschnitt, sondern über eine Nockenrolle, welche in einer teilkreisförmigen Ausnehmung des Stegblechs gelagert ist. Bremsträgerbaugruppe mit Lagerbolzen, Bremsnocken, Nockenrolle und Bremswelle wirken mit der erfindungsgemäßen Bremsbacke zusammen. Sie sind jedoch nicht Bestandteil der erfindungsgemäßen Bremsbacke.

Die erfindungsgemäße Bremsbacke ist dadurch gekennzeichnet, dass das Stegblech an dem nockenseitigen Endabschnitt eine Auskragung aufweist, welche eine nockenseitige Stirnfläche des Belagblechs zumindest abschnittsweise in einer Überdeckungsfläche überdeckt und sich an der Überdeckungsfläche an der nockenseitigen Stirnfläche des Belagblechs abstützt.

Die Auskragung führt über eine in Richtung des nockenseitigen Endabschnitts fortgesetzte gekrümmte Verbindungslinie von Belagblech und Stegblech in exzentrischer radialer Richtung hinaus. Die Auskragung befindet sich an einem Abschnitt des Stegblechs, an dem das Stegblech über das Belagblech hinaus fortgeführt ist.

Die Überdeckungsfläche bezeichnet die Fläche, an der die Auskragung die nockenseitige Stirnfläche des Belagblechs überdeckt. Die Überdeckungsfläche überdeckt somit eine Teilfläche der nockenseitgen Stirnfläche.

An der Überdeckungsfläche stützt sich die Auskragung an der Stirnseite des Belagblechs ab. Dies bedeutet, dass die Auskragung so ausgebildet ist, dass Sie an der Überdeckungsfläche eine Kraft, die aus der von dem Bremsnocken eingetragenen Kraft resultiert, auf das Belagblech übertragen kann.

Soweit es bei dem Stegblech und dem Belagblech um miteinander verbundene Bauteile handelt, kann die Überdeckungsfläche als bloße Druckkontaktfläche ausgebildet sein. Möglich ist aber auch eine stoffschlüssige Verbindung an der Überdeckungsfläche oder eine monolithische Ausbildung, so dass die Überdeckungsfläche dann als Querschnitt eines teilweise oder vollständig stofflichen durchgehenden Bereichs vorliegt.

Das Stegblech unterliegt in dem nockenseitigen Endbereich erheblichen Biegebeanspruchungen, insbesondere im Bereich der teilkreisförmigen Ausnehmung für die Nockenrolle. Durch die Übertragung der Kraft auf das Belagblech wird das Stegblech entlastet und die Spannungen werden erheblich reduziert.

Überraschend wurde damit gefunden, dass mit einem sehr geringen konstruktiven Aufwand und mit einem sehr geringem Materialeinsatz eine erhebliche Verbesserung der Stabilität erreicht werden kann.

Vorteilhaft kann damit auch bei hoher Belastung zuverlässig erreicht werden, dass die Streckgrenze auch bei den üblichen Materialgüten nicht erreicht wird und somit die Spannung im sicheren elastischen Bereich verbleibt. Hieraus ergibt sich der Mehrwert, dass ein Bauteilversagen der Bremsbacke in jedem Fall verhindert wird.

Gemäß einer vorteilhaften Weiterbildung erstreckt sich die Überdeckungsfläche über die gesamte Breite der nockenseitigen Stirnfläche. Dies bedeutet, dass die Auskragung über die gesamte Breite der nockenseitigen Stirnfläche reicht. Als Breite der nockenseitigen Stirnfläche ist deren radiale Erstreckung zu verstehen. Die Breite der nockenseitigen Stirnfläche wird also durch die Dicke des Belagblechs bestimmt. Gemäß dieser Weiterbildung besteht eine besonders große Überdeckungsfläche und eine günstige Geometrie, so dass die Kraftableitung aus dem Stegblech in das Belagblech mit vergleichsweise geringen Spannungsgradienten bewirkt werden kann. Damit können vorteilhaft besonders hohe Belastungen aufgenommen werden.

Die Erfindung wird als Ausführungsbeispiel anhand von
- Fig. 1: Perspektivische Ansicht einer Bremsbacke
- Fig. 2: Seitenansicht einer Bremsbacke
- Fig. 2a: Vergrößerungsausschnitt zu Fig. 2
- Fig. 3: Seitenansicht eines Stegblechs einer Bremsbacke gemäß dem Stand der Technik
- Fig. 3a: Vergrößerungsausschnitt zu Fig. 3
näher erläutert.

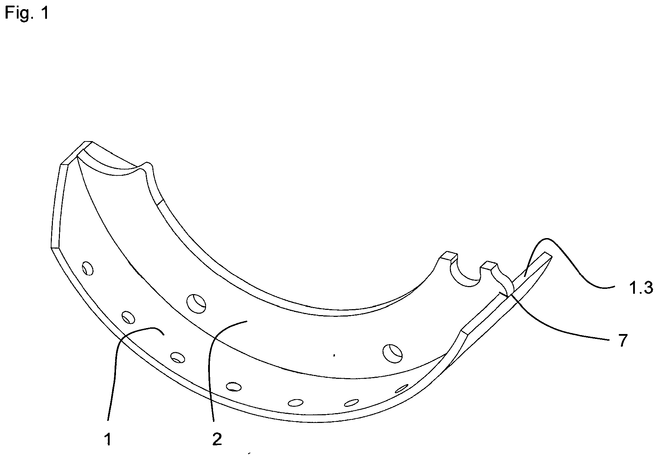

Wie Fig. 1 bis 2a zeigen, weist in dem Ausführungsbeispiel einer Bremsbacke einer nockenbetätigten Fahrzeug-Trommelbremse die Bremsbacke ein Belagblech 1 und ein Stegblech 2 auf. Das Belagblech 1 ist in der Form eines Teilkreises gekrümmt. Es weist eine konvexe Außenseite 1.1 und eine konkave Innenseite 1.2 auf. Das Stegblech 2 weist ebenfalls eine teilkreisförmige Kontur auf. Das Belagblech 1 und das Stegblech 2 sind miteinander verschweißt. Die Bremsbacke kann jedoch auch aus einem Teil hergestellt sein. Die Planebene des Stegblechs 2 ist dabei rechtwinklig zu der gekrümmten Flachebene des Belagblechs 1 angeordnet. Das Stegblech 2 ist auf der Innenseite 1.2 des Belagblechs angeschweißt. Der Bremsbelag befindet sich auf der Außenseite 1.1 des Belagblechs 1, wobei dieser in den Figuren nicht dargestellt ist. Wie insbesondere Fig. 1 zeigt, bilden das Belagblech 1 und das Stegblech 2 einen T-Querschnitt aus.

Die Bremsbacke weist einen etwa mittigen Hauptabschnitt 3 sowie einen lagerseitigen Endabschnitt 4 und einen nockenseitigen Endabschnitt 5 auf, welche jeweils an den Hauptabschnitt 3 angrenzen. An dem lagerseitigen Endabschnitt 4 stützt sich die Bremsbacke an einem Lagerbolzen eines Bremsträgers einer Nutzfahrzeugachse ab.

Dem lagerseitigen Endabschnitt 4 gegenüberliegend befindet sich der nockenseitige Endabschnitt 5. Wie die Figuren 1 bis 2a zeigen, weist das Stegblech 2 im Ausführungsbeispiel an dem nockenseitigen Endabschnitt 5 eine teilkreisförmige Ausnehmung auf, in welcher eine Nockenrolle gelagert ist. Die Nockenrolle ist in den Figuren nicht dargestellt. An dieser Stelle wird bei einem bestimmungsgemäßen Gebrauch bei einer Bremsbetätigung von einem Bremsnocken eine Druckkraft auf die Bremsbacke übertragen, welche diese an die innenseitige Mantelfläche einer Bremstrommel anpresst.

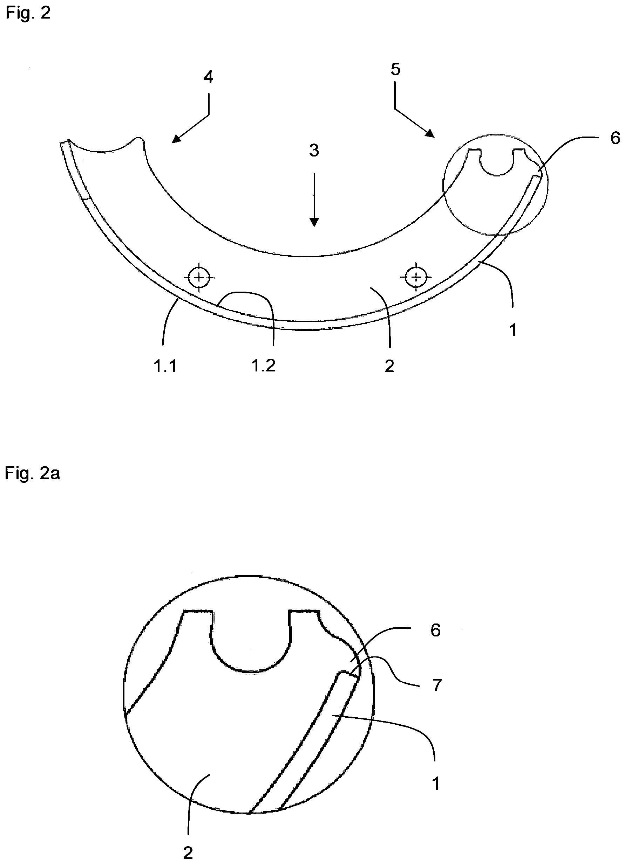

Im Unterschied zum Stand der Technik weist das Stegblech 2 an seinem nockenseitigen Endabschnitt 5 zudem eine Auskragung 6 auf. Wie insbesondere der Vergrößerungsausschnitt nach Fig. 2a erkennen lässt, überragt die Auskragung 6 eine fortgesetzte Linie der Verbindungslinie zwischen dem Stegblech 2 und dem Belagblech 1. Die Auskragung 6 ist soweit an eine Stirnfläche 1.3 des Belagblechs 1 herangeführt und weist eine solche Kontur auf, dass sie mit einem Teil ihrer Konturfläche an der Stirnfläche 1.3 des Belagblechs 1 anliegt, so dass ein Druckkontakt besteht. Bei dieser Fläche handelt es sich um die Überdeckungsfläche 7. Über diese Überdeckungsfläche ist eine Kraft von dem Stegblech 2 auf die Stirnseite 1.3 des Belagblechs 1 einleitbar. Durch diesen zusätzlichen Kraftabtrag von dem Stegblech 2 direkt im nockenseitigen Endabschnitt 5 werden die Materialspannungen im Stegblech 2 soweit reduziert, dass bei bestimmungsgemäßer Verwendung ein Bauteilversagen durch Überbeanspruchung zuverlässig vermieden werden kann. Wie die Fig. 1 bis 2a zeigen, erstreckt sich in dem Ausführungsbeispiel die Überdeckungsfläche 7 über die gesamte Breite der Stirnfläche 1.3.

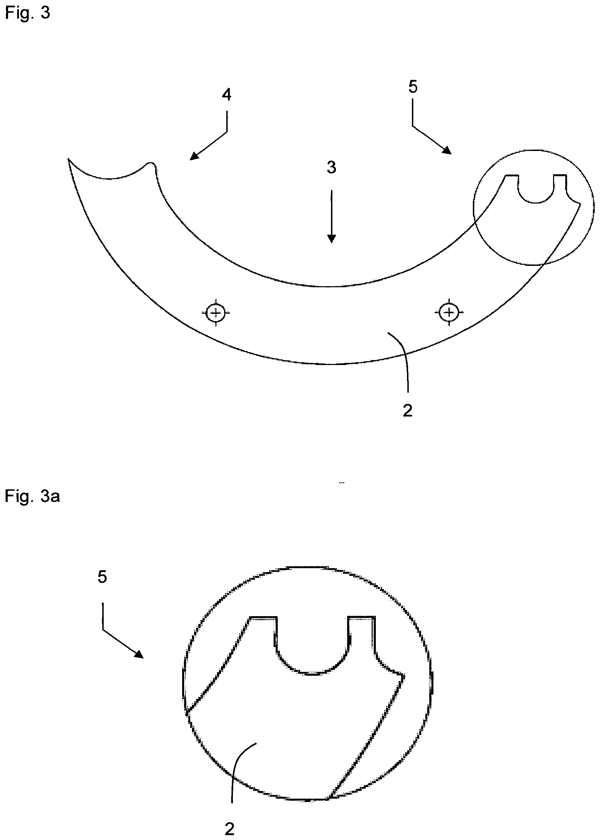

Die Fig. 3 und 3a stellen ein Stegblech einer Ausführung nach dem Stand der Technik dar und zeigen den gattungsmäßig bestehenden Aufbau. Wie insbesondere Fig. 3a erkennen lässt, ist eine Auskragung nach dem Stand der Technik nicht vorhanden und es kann keine Kraft auf die Stirnseite eines Belagblechs übertragen werden.

### Verwendete Bezugszeichen

- 1: Belagblech
- 1.1: Außenseite des Belagblechs
- 1.2: Innenseite des Belagblechs
- 1.3: Stirnseite des Belagblechs
- 2: Stirnblech
- 3: Hauptabschnitt
- 4: lagerseitiger Endabschnitt
- 5: nockenseitiger Endabschnitt
- 6: Auskragung
- 7: Überdeckungsfläche

## Patentansprüche

1. Bremsbacke einer nockenbetätigten Fahrzeug-Trommelbremse, aufweisend ein Belagblech (1), welches teilkreisförmig gekrümmt ist und an einer Außenseite (1.1) einen Bremsbelag trägt, aufweisend ein Stegblech (2), welches an einer Innenseite (1.2) des Belagblechs (1) angeordnet und mit diesem verbunden ist, wobei in einem Hauptabschnitt (3) Belagblech (1) und Stegblech (2) einen T-Querschnitt ausbilden,
wobei die Bremsbacke einen lagerseitigen Endabschnitt (4) aufweist, mit dem sich die Bremsbacke an einem Lagerbolzen abstützt und wobei die Bremsbacke einen nockenseitigen Endabschnitt (5) aufweist, auf den eine Druckkraft durch einen Bremsnocken einleitbar ist und wobei an dem nockenseitigen Endabschnitt (5) das Stegblech (2) eine teilkreisförmige Ausnehmung zur Aufnahme des Bremsnockens aufweist,
**dadurch gekennzeichnet,**
**dass** das Stegblech (2) an dem nockenseitigen Endabschnitt (5) eine Auskragung (6) aufweist, welche eine nockenseitige Stirnfläche (1.3) des Belagblechs (1) zumindest abschnittsweise in einer Überdeckungsfläche (7) überdeckt und sich an der Überdeckungsfläche (7) an der nockenseitigen Stirnfläche (1.3) des Belagblechs (1) abstützt und dass die Auskragung (6) radial über der teilkreisförmigen Ausnehmung angeordnet ist.

2. Bremsbacke einer nockenbetätigten Fahrzeug-Trommelbremse nach Anspruch 1,
**dadurch gekennzeichnet,**
**dass** sich die Überdeckungsfläche (7) über die gesamte Breite der nockenseitigen Stirnfläche (1.3) erstreckt.
HIERZU DREI SEITEN ZEICHNUNGEN

## Claims

1. A brake shoe of a cam-actuated vehicle drum brake,
comprising a lining sheet (1), which is curved in the shape of a partial circle and at one outer face (1.1) it carries a brake shoe lining comprising a bar sheet (2) that is arranged on an inner side (1.2) of the lining sheet (1) and joint with it, wherein in a main section (3) the lining sheet (1) and the bar sheet (2) form a T-shaped cross section,
wherein the brake shoe has a bearing-side end section (4) by means of which the brake shoe is supported at a bearing bolt, and wherein the brake shoe has a cam-side end section (5) to which a compressive force can be transmitted by a brake cam, and wherein the bar sheet (2) has a recess shaped as a partial circle at the cam-side end section (5) for receiving the brake cam,
**characterized in**
**that** at the cam-side end section (5) the bar sheet (2) is provided with a bulge (6) which overlaps a cam-side front face (1.3) of the lining sheet (1) at least in sections on an overlapping surface (7) and is supported on the overlapping surface (7) at the cam-side front face (1.3) of the lining sheet (1), and that the bulge (6) is arranged radially above the recess shaped as a partial circle.

2. The brake shoe of a cam-actuated vehicle drum brake according to claim 1, **characterized in**
**that** the overlapping surface (7) extends across the complete width of the cam-side front face (1.3).

## Revendications

1. Patin de frein d'un frein à tambour de véhicule actionné par une came comprenant une plaque de garniture (1) courbée en forme de portion de cercle, qui porte une garniture de frein sur un côté extérieur (1.1), comprenant une tôle d'âme (2) disposée sur un côté intérieur (1.2) de la plaque de garniture (1) et reliée à celle-ci, la plaque de garniture (1) et la tôle d'âme (2) formant une section transversale en T dans une section principale (3),
le patin de frein présentant une partie d'extrémité (4) côté palier, au moyen de laquelle le patin de frein s'appuie sur un boulon d'appui et le patin de frein présente une partie d'extrémité (5) côté came, sur laquelle une force de pression peut être introduite par une came de frein, et, sur la partie d'extrémité (5) côté came, la tôle d'âme (2) présente un évidement partiellement circulaire pour recevoir la came de frein,
est **caractérisé en ce que**
la tôle d'âme (2) présente une saillie (6) sur la partie d'extrémité (5) côté came, qui recouvre une face frontale (1.3) côté came de la plaque de garniture (1) au moins partiellement dans une surface de recouvrement (7) et qui s'appuie sur la surface de recouvrement (7) sur la face frontale (1.3) côté came de la plaque de garniture(1), et **en ce que** la saillie (6) est disposée radialement au-dessus de l'évidement partiellement circulaire.

2. Patin de frein d'un frein à tambour de véhicule actionné par une came suivant la revendication 1,
est **caractérisé en ce que**
la surface de recouvrement (7) s'étend sur toute la largeur de la face frontale côté came (1.3).
